# EUROPEAN PATENT APPLICATION

(11) **EP 3 546 796 A1**
(43) Date of publication of application: **02.10.2019**
(21) Application number: 17887863.3
(22) Date of filing: 15.12.2017
(51) Int. Cl.: F16H 48/30

(54) **DIFFERENTIAL, AND VEHICLE**

(30) Priority: 27.12.2016 CN 201611226769
(71) Applicant: BYD Company Limited, Shenzhen, Guangdong 518118 (CN)
(72) Inventor: LING, Heping, Shenzen Guangdong 518118 (CN); ZHAI, Zhen, Shenzen Guangdong 518118 (CN); XU, Youbin, Shenzen Guangdong 518118 (CN); HUANG, Changan, Shenzen Guangdong 518118 (CN)
(74) Representative: Hoffmann Eitle
(86) International application number: PCT/CN2017/116618
(87) International publication number: WO 2018/121298

(57) **Abstract**

The present invention discloses a differential mechanism and a vehicle. The differential mechanism includes: a shell, where a left half axle gear, a right half axle gear, a planet wheel and a planet wheel axle are disposed in the shell, the planet wheel is rotatably mounted on the planet wheel axle, and the planet wheel meshes with the left half axle gear and the right half axle gear; a power engagement device, where the power engagement device includes a first engagement portion and a second engagement portion, the first engagement portion is connected with the left half axle gear or the right half axle gear, and the second engagement portion rotates synchronously with the shell and may move axially relative to the shell; and an engagement portion drive device, where the engagement portion drive device includes: a drive pin and a drive portion, and the drive portion is configured to drive the drive pin to drive the second engagement portion to move close to the first engagement portion along an axial direction, thereby causing the second engagement portion to be engaged with the first engagement portion. Therefore, the differential mechanism is allowed to lock two half axles to improve the anti-stuck capacity of the vehicle.

## Description

### CROSS-REFERENCE TO RELATED APPLICATIONS

This application claims priority to Chinese Patent Application No. 201611226769.0, filed with the State Intellectual Property Office of P. R. China on December 27, 2016. The entire content of the above-referenced application is incorporated herein by reference.

### FIELD

The present invention relates to the technical field of vehicles, and more particularly relates to a differential mechanism and a vehicle having the differential mechanism.

### BACKGROUND

In the related art, an electric locking type differential mechanism has a complicated structure, many parts and a large occupation space, which makes the differential mechanism have relatively high cost, high control difficulty and a cumbersome realization process. In addition, the relatively large quantity of parts also cause high assembling difficulty and low assembling efficiency and also reduces the space utilization rate of a vehicle.

### SUMMARY

An objective of the present invention is to at least resolve one of the technical problems in the related art to some extent. Thus, the present invention provides a differential mechanism which is simple in structure and reliable in function realization and may improve the anti-stuck capacity of a vehicle.

The present invention further provides a vehicle.

The differential mechanism according to the present invention includes: a shell, where a left half axle gear, a right half axle gear, a planet wheel and a planet wheel axle are disposed in the shell, the planet wheel is rotatably mounted on the planet wheel axle, and the planet wheel meshes with the left half axle gear and the right half axle gear; a power engagement device, where the power engagement device includes a first engagement portion and a second engagement portion, the first engagement portion is connected with the left half axle gear or the right half axle gear, and the second engagement portion rotates synchronously with the shell and is allowed to move axially relative to the shell; and an engagement portion drive device, where the engagement portion drive device includes: a drive pin and a drive portion, the drive pin is configured to be allowed to rotate with the shell and be allowed to move axially relative to the shell, two ends of the drive pin are respectively matched with the drive portion and the second engagement portion, and the drive portion is configured to drive the drive pin to drive the second engagement portion to move close to the first engagement portion along an axial direction, thereby causing the second engagement portion to be engaged with the first engagement portion.

In the differential mechanism according to the present invention, the drive portion may drive the second engagement portion to be engaged with the first engagement portion by driving the drive pin to move axially, thereby causing the shell to be locked with the corresponding half axle gears. As a result, two half axles are locked to improve the anti-stuck capacity of the vehicle. Furthermore, by the arrangement of the power engagement device and the engagement portion drive device, locking of the left half axle and the right half axle may be realized, so that the differential mechanism has a simple structure, reliable function realization, a small number of parts, a small volume and low cost.

In addition, the differential mechanism according to the present invention also may have the following distinguishing technical features.

In some examples of the present invention, a drive axle sliding chute is formed in the shell, and the drive pin is slidably disposed in the drive axle sliding chute.

In some examples of the present invention, a shell axial slot is also formed in the shell. A second engagement portion protrusion is disposed on the second engagement portion. The second engagement portion protrusion is disposed in the shell axial slot to cause the second engagement portion to be allowed to rotate with the shell and be allowed to move axially relative to the shell.

In some examples of the present invention, the differential mechanism also includes: an elastic device. The elastic device elastically presses against the second engagement portion to cause the second engagement portion to have a trend of moving away from the first engagement portion.

In some examples of the present invention, one end of the elastic device elastically presses against the second engagement portion, and the other end of the elastic device elastically presses against the shell.

In some examples of the present invention, the elastic device is a spiral spring, and the spiral spring is disposed on an outer side of the first engagement portion in a sleeving manner.

In some examples of the present invention, the drive portion is a hydraulic drive portion. The hydraulic drive portion includes: a follow-up portion. The follow-up portion may rotate with the drive pin and may be braked. A drive surface is disposed on the follow-up portion. When the follow-up portion is braked, the drive surface drives the drive pin to move along the axial direction by the sliding of the drive pin on the drive surface, so as to cause the second engagement portion to be engaged with the first engagement portion.

In some examples of the present invention, the hydraulic drive portion also includes: a hydraulic brake portion. The hydraulic brake portion is configured to brake the follow-up portion.

In some examples of the present invention, the hydraulic brake portion is structured as a hydraulic brake caliper. One side of the follow-up portion is provided with a brake disc. The hydraulic brake caliper is used for braking the brake disc.

In some examples of the present invention, the hydraulic brake caliper includes a friction sheet for clamping the brake disc.

In some examples of the present invention, the drive surface is a slope or a curved surface.

In some examples of the present invention, the drive surface includes: a first section and a second section. The first section is connected with the second section. Ajoint of the first section and the second section is a lowest point, and the other ends, away from the joint, of the first section and the second section are highest points.

In some examples of the present invention, the follow-up portion includes: a follow-up portion body and an annular follow-up portion flange disposed on the follow-up portion body. The drive surface is disposed on an end surface, facing the drive pins, of the follow-up portion flange.

In some examples of the present invention, a drive surface limiting slot is formed in the drive surface. One end of the drive pin is located in the drive surface limiting slot.

In some examples of the present invention, the first engagement portion has a plurality of first engagement teeth distributed along a circumferential direction, and the second engagement portion has a plurality of second engagement teeth distributed along the circumferential direction.

In some examples of the present invention, the drive pin is in attaching fit with the second engagement portion.

The vehicle according to the present invention includes the differential mechanism for the vehicle.

### BRIEF DESCRIPTION OF THE DRAWINGS

Fig. 1 is a schematic diagram of a differential mechanism according to an embodiment of the present invention;
Fig. 2 is a structural schematic diagram of the differential mechanism without a shell;
Fig. 3 is an exploded view of the differential mechanism according to the embodiment of the present invention;
Fig. 4 is a schematic diagram of the shell and a second engagement portion; and
Fig. 5 is a structural schematic diagram of an engagement portion drive device.

### Reference numerals of the accompanying drawing:

100: differential mechanism;
10: shell; 11: left half axle gear; 12: right half axle gear; 13: planet wheel; 14: planet wheel axle; 15: drive axle sliding chute; 16: shell axial slot;
20: power engagement device; 21: first engagement portion; 211: first connection tooth;
22: second engagement portion; 221: second engagement portion protrusion; 222: second connection tooth;
30: engagement portion drive device; 31: drive pin;
32: drive portion; 321: follow-up portion; 321a: follow-up portion body; 321b: follow-up portion flange;
322: hydraulic brake portion; 323: brake disc; 325: drive surface; 325a: first section;
325b: second section; 325c: drive surface limiting slot; and
40: elastic device.

### DETAILED DESCRIPTION

The embodiments of the present invention are described in detail below. Examples of the embodiments are illustrated in the accompanying drawings. The following embodiments described with reference to the accompanying drawings are exemplary, and are intended to describe the present invention and cannot be construed as a limitation to the present invention.

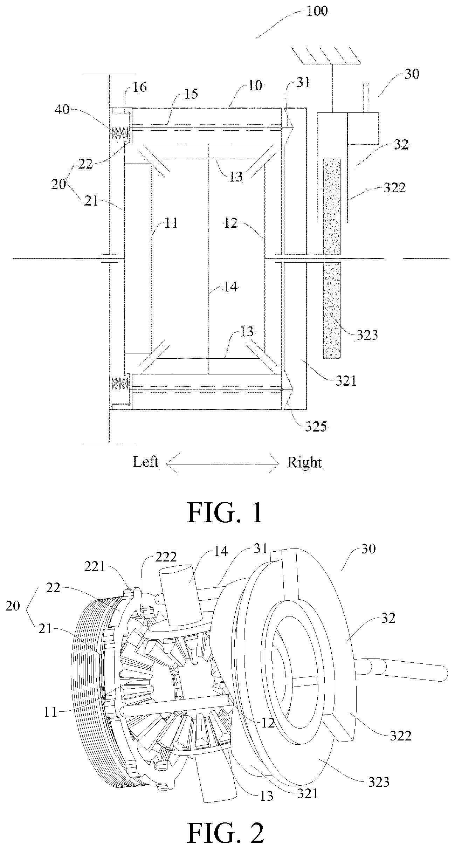

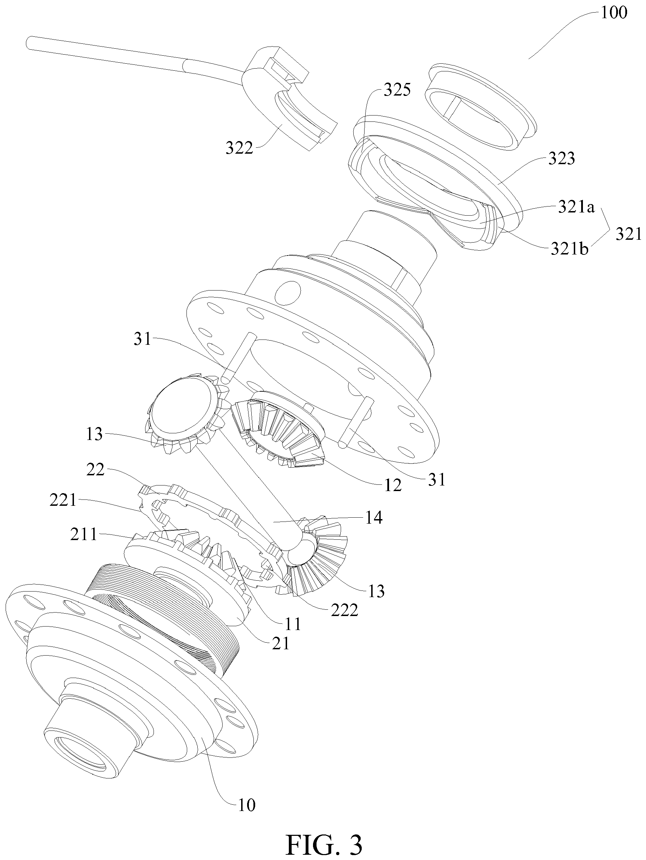

A differential mechanism 100 for a vehicle according to an embodiment of the present invention is described below in detail with reference to Fig. 1 to Fig. 5. The differential mechanism 100 may lock two half axles when the vehicle skids, thereby improving the anti-stuck capacity of the vehicle.

As shown in Fig. 1, Fig. 2 and Fig. 3, the differential mechanism 100 according to the embodiment of the present invention may include: a shell 10, a power engagement device 20 and an engagement portion drive device 30. The power engagement device 20 may be applied to the shell 10 and one half axle gear. The engagement portion drive device 30 may be used for driving the power engagement device 20 to be engaged.

As shown in Fig. 1 to Fig. 3, a left half axle gear 11, a right half axle gear 12, planet wheels 13 and a planet wheel axle 14 may be disposed in the shell 10. The planet wheels 13 may be rotatably mounted on the planet wheel axle 14. The planet wheels 13 mesh with the left half axle gear 11 and the right half axle gear 12. The left half axle gear 11 is fixed on a left half axle, and the right half axle gear 12 is fixed on a right half axle, so that the differential mechanism 100 may output a power to the left half axle and the right half axle on two sides.

When the vehicle normally straightly runs, the planet wheels 13 revolve with the planet wheel axle 14. The rotating speeds of the left half axle gear 11 and the right half axle gear 12 are the same, and the rotating speeds of a left wheel on the left half axle and a right wheel on the right half axle are the same.

When the vehicle turns normally, for example, when the vehicle turns left, the planet wheels 13 revolve with the planet wheel axle 14 and rotate around the planet wheel axle 14, and the rotating speed of the left half axle gear 11 is decreased, and the rotating speed of the right half axle gear 12 is increased.

The power engagement device 20 includes a first engagement portion 21 and a second engagement portion 22. The first engagement portion 21 is connected with the left half axle gear 11 or the right half axle gear 12. The second engagement portion 22 rotates synchronously with the shell 10, and the second engagement portion 22 may move axially relative to the shell 10. In this way, the second engagement portion 22 may be selectively engaged with the first engagement portion 21 by axial movement. When the second engagement portion 22 is engaged with the first engagement portion 21, the half shaft gears and the shell 10 have the same rotating speed. At the moment, the locking of the two half axles may be realized to improve the anti-stuck capacity of the vehicle. The first engagement portion 21 is connected with the left half axle gear 11 or the right half axle gear 12 to realize corresponding functions of the differential mechanism 100. The following contents are described in detail by taking engagement between the first engagement portion 21 and the left half axle gear 11 as an example.

The engagement portion drive device 30 may include: drive pins 31 and a drive portion 32. The drive pins 31 are configured to be able to rotate with the shell 10, and the drive pins 31 are able to move axially relative to the shell 10. Two ends of the drive pins 31 are respectively matched with the drive portion 32 and the second engagement portion 22. The drive portion 32 is configured to drive the drive pins 31 to drive the second engagement portion 22 to move close to the first engagement portion 21 along an axial direction, thereby causing the second engagement portion 22 to be engaged with the first engagement portion 21. That is, the drive portion 32 may drive the second engagement portion 22 to be engaged with the first engagement portion 21 by driving the drive pins 31 to move axially, thereby causing the shell 10 to be locked with the corresponding half axle gears. As a result, the two half axles are locked to improve the anti-stuck capacity of the vehicle.

A traditional electric locking type differential mechanism is formed by adding an electrically actuated locking mechanism on the basis of a common open type differential mechanism, so that the differential mechanism has a locking function and is locked through electrical control. This is an electric locking differential mechanism generally applied to a centralized drive type fuel automobile. That is, power is distributed to left and right half axles after passing through a main speed reducer and the differential mechanism, and the differential mechanism adjusts a left and right wheel speed difference. However, since the electric locking differential mechanism is large in volume and an electric vehicle does not have an engine, this differential mechanism cannot be directly applied to the electric vehicle.

Therefore, the differential mechanism of the present invention is significantly different from the traditional electric locking type differential mechanism in structure and realizing mode. Furthermore, by the arrangement of the power engagement device 20 and the engagement portion drive device 30, the locking of the left half axle and the right half axle may be realized, so that the differential mechanism 100 may have a simple structure, reliable function realization, a small number of parts, a small volume and low cost.

Optionally, as shown in Fig. 1, a drive axle sliding chute 15 may be formed in the shell 10. The drive pins 31 are slidably disposed in the drive axle sliding chute. Therefore, the drive axle sliding chute 15 may limit radial movements of the drive pins 31, and the drive axle sliding chute 15 also may play an axial guiding effect to at least a certain extent, thereby causing the axial movements of the drive pins 31 to be more stable and reliable and then improving the working reliability of the differential mechanism 100.

Further, as shown in Fig. 1, a shell axial slot 16 may also be formed in the shell 10. A second engagement portion protrusion 221 is disposed on the second engagement portion 22. The second engagement portion protrusion 221 is disposed in the shell axial slot 16 to cause the second engagement portion 22 to rotate with the shell 10, and the second engagement portion 22 may move axially relative to the shell 10. Thus, the matching between the shell axial slot 16 and the second engagement portion protrusion 221 may allow the second engagement portion 22 to move in the axial direction relative to the shell 10 and may cause the shell 10 to synchronously drive the second engagement portion 22 to rotate in the circumferential direction, thereby guaranteeing the working reliability of the differential mechanism 100.

According to one specific embodiment of the present invention, as shown in Fig. 1, the differential mechanism 100 also may include: elastic devices 40. The elastic devices 40 elastically press against the second engagement portion 22 to cause the second engagement portion 22 to have a trend of moving away from the first engagement portion 21. It can be understood that the second engagement portion 22 needs to counteract an elastic force of the elastic devices 40 in the process of moving close to the first engagement portion 21, but the elastic devices 40 may drive the second engagement portion 22 to move away from the first engagement portion 21 when the second engagement portion 22 moves away from the first engagement portion 21. The elastic devices 40 may play resetting and separating roles, and then may improve the working reliability of the differential mechanism 100 and allow the second engagement portion 22 to work repeatedly.

Preferably, as shown in Fig. 1, one end of each of the elastic devices 40 elastically presses against the second engagement portion 22, and the other end of each of the elastic devices 40 elastically presses against the shell 10. In this way, the elastic devices 40 are disposed reliably and are convenient to work.

Specifically, as shown in Fig. 1, the elastic devices 40 may be spiral springs, and the spiral springs are disposed on an outer side of the first engagement portion 21 in a sleeving manner. This way may reasonably use a radial space of the differential mechanism 100, cause the radial space of the differential mechanism 100 to be disposed reasonably, increase the space utilization rate of the differential mechanism 100 and contribute to miniaturization of the differential mechanism 100.

The drive portion 32 may be a hydraulic drive portion 32. The hydraulic drive portion 32 may include: a follow-up portion 321. The follow-up portion 321 is able to rotate with the drive pins 31, and the follow-up portion 321 is able to be braked. A drive surface 325 is disposed on the follow-up portion 321. When the follow-up portion 321 is braked, the drive pins 31 slide on the drive surface 325 to change contact fit positions of the drive pins 31 and the drive surface 325, so as to enable the drive surface 325 to drive the drive pins 31 to move along the axial direction, and to cause the second engagement portion 22 to be engaged with the first engagement portion 21. It can be understood that before the follow-up portion 321 is braked, the follow-up portion 321 and the drive pins 31 may be in a synchronous rotating relation, but after the follow-up portion 321 is braked, the rotating speed of the follow-up portion 321 is decreased, and a rotating speed difference will be generated between the follow-up portion 321 and the drive pins 31. In this way, the drive pins 31 may slide on the drive surface 325 of the follow-up portion 321, and the sliding drive pins 31 may move axially relative to the shell 10, so that the drive pins 31 may drive the second engagement portion 22 to gradually move close to the first engagement portion 21 till the second engagement portion 22 is engaged with the first engagement portion 21.

Further, as shown in Fig. 2, Fig. 3 and Fig. 5, the hydraulic drive portion 32 also may include: a hydraulic brake portion 322. The hydraulic brake portion 322 is configured to brake the follow-up portion 321. That is, the hydraulic brake portion 322 may play a role of braking the follow-up portion 321. When the first engagement portion 21 and the second engagement portion 22 need to be engaged, the hydraulic brake portion 322 may brake the follow-up portion 321.

Preferably, the hydraulic brake portion 322 is structured as a hydraulic brake caliper. One side of the follow-up portion 321 is provided with a brake disc 323. The hydraulic brake caliper is used for braking the brake disc 323. That is, the hydraulic brake caliper brakes the follow-up portion 321 by braking the brake disc 323, so as to generate the rotating speed difference between the follow-up portion 321 and the drive pins 31, thereby causing the drive pins 31 to drive the second engagement portion 22 to be engaged with the first engagement portion 21.

Specifically, the hydraulic brake caliper may include a friction sheet for clamping the brake disc 323. Thus, the hydraulic brake caliper may drive, in a hydraulic manner, the friction sheet and the brake disc 323 to be in contact to perform friction braking.

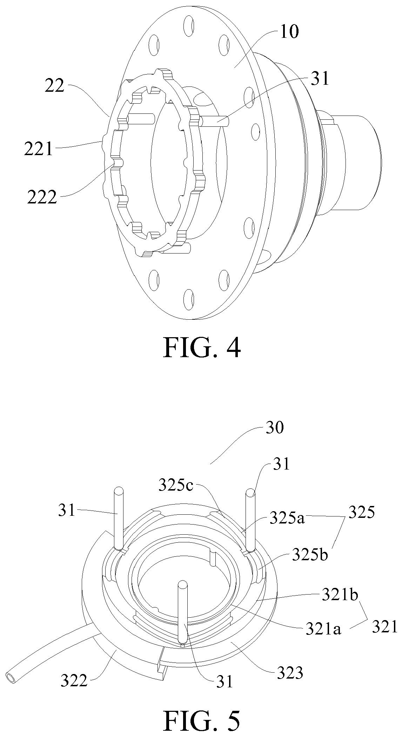

According to one specific embodiment of the present invention, as shown in Fig. 5, the drive surface 325 may be a slope or a curved surface. Setting the drive surface 325 into the slope or curved surface may be favorable for the sliding of the drive pins 31 on the drive surface 325 and may promote the drive pins 31 to move in the axial direction.

Further, the drive surface 325 may include: a first section 325a and a second section 325b. The first section 325a is connected with the second section 325b. Ajoint of the first section 325a and the second section 325b is a lowest point, and the other ends, away from the joint, of the first section 325a and the second section 325b are highest points. Thus, when one end of each of the drive pins 31 is at the lowest point, the first engagement portion 21 and the second engagement portion 22 are in a disengaged state. When one end of each of the drive pins 31 is at the highest points or adjacent to the highest points, the first engagement portion 21 and the second engagement portion 22 are in an engaged state. In this way, the reasonable arrangement of the drive surface 325 may be favorable for the sliding of the drive pins 31 between the lowest point and the highest points, the engagement between the first engagement portion 21 and the second engagement portion 22 and the improvement of the working reliability of a drive axle locking device.

Preferably, each of the first section 325a and the second section 325b may be of an arc shape. The arc-shaped first section 325a and the arc-shaped second section 325b may be favorable for the sliding of one end of each of the drive pins 31 on the drive surface 325 and may reduce moving resistance of the drive pins 31.

Optionally, a central angle corresponding to each of the first section 325a and the second section 325b is equal. In this way, the first section 325a and the second section 325b are basically the same, which may be more favorable for the sliding of the drive pins 31 on the drive surface 325.

Optionally, there may be a plurality of sections of drive surfaces 325, and the plurality of sections of drive surfaces 325 are distributed along the circumferential direction in a spacing manner. Thus, the number of the drive pins 31 may correspond to the number of the drive surfaces 325, which may increase the number of the drive pins 31, thereby causing the plurality of drive pins 31 to reliably fit with the second engagement portion 22, allowing the second engagement portion 22 to move axially and reliably, and allowing the drive axle locking device to work more reliably.

The plurality of sections of drive surfaces 325 may be connected through a connection plane. The connection plane is flush with the highest points. In this way, the structural reliability of the drive surfaces 325 of the follow-up portion 321 may be improved to at least a certain extent, and the structural reliability of the drive axle locking device may be improved.

According to one alternative embodiment of the present invention, as shown in Fig. 5, the follow-up portion 321 may include: a follow-up portion body 321a and an annular follow-up portion flange 321b disposed on the follow-up portion body 321a. The drive surface 325 is disposed on an end surface, facing the drive pins 31, of the follow-up portion flange 321b. In this way, the follow-up portion body 321a may effectively enhance the structural reliability of the follow-up portion 321. Furthermore, the drive surface 325 may be disposed on the end surface of the follow-up portion flange 321b, so that the design difficulty of the drive surface 325 may be reduced, and the structural reliability of the drive surface 325 may be improved.

Further, as shown in Fig. 5, drive surface limiting slots 325c may be formed in the drive surface 325. One end of each of the drive pins 31 is located in each of the drive surface limiting slots 325c. Thus, through the arrangement of the drive surface limiting slots 325c, one end of each of the drive pins 31 may be fitted in each of the drive surface limiting slots 325c, which may prevent one end of each of the drive pins 31 from being separated from the drive surface 325 to at least a certain extent and may improve the moving reliability and stability of the drive pins 31 in the drive surface 325.

According to one specific embodiment of the present invention, as shown in Fig. 2, Fig. 3 and Fig. 4, the first engagement portion 21 has a plurality of first engagement teeth 211 distributed along the circumferential direction, and the second engagement portion 22 has a plurality of second engagement teeth 222 distributed along the circumferential direction. It can be understood that when the first engagement teeth 211 and the second engagement teeth 222 are matched, the first engagement portion 21 and the second engagement portion 22 are engaged. Through the arrangement of the plurality of first engagement teeth 211 and the plurality of second engagement teeth 222, the matching reliability of the first engagement portion 21 and the second engagement portion 22 may be improved.

Optionally, the drive pins 31 are in attaching fit with the second engagement portion 22. In this way, the drive pins 31 and the second engagement portion 22 are matched reliably, which may improve the working reliability of the differential mechanism 100.

A working principle of the differential mechanism 100 according to the embodiment of the present invention is described below in detail.

When a vehicle gets stuck and skids, the hydraulic brake portion brakes the follow-up portion 321, so the rotating speed of the follow-up portion 321 is suppressed, and the rotating speed difference is generated between the drive pins 31 and a brake component. The drive pins 31 slide on the drive surface 325 of the brake component. The drive pins 31 may slide from the lowest point of the drive surface 325 to the highest points or to a position adjacent to the highest points; the drive pins 31 move axially towards one side of the second engagement portion 22, so that the drive pins 31 also may drive the second engagement portion 22 to gradually move close to the first engagement portion 21 till the first engagement portion 21 and the second engagement portion 22 are engaged. At this moment, the left half axle and the right half axle rotate synchronously, thereby improving the anti-stuck capacity of the vehicle.

After the vehicle gets out, the elastic devices 40 push the second engagement portion 22 to move axially away from the first engagement portion 21. In this process, the drive pins 31 move axially with the second engagement portion 22, and the ends, matched with the drive surface 325, of the drive pins 31 may gradually slide from the highest points or the position adjacent to the highest points to the lowest point. At this moment, the second engagement portion 22 and the first engagement portion 21 are completely disengaged, and the vehicle may continuously run according to the foregoing normal straight running way and the foregoing normal turning way.

The vehicle according to an embodiment of the present invention includes the differential mechanism 100 of the foregoing embodiment.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present invention. In this specification, schematic descriptions of the foregoing terms do not need to aim at a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in the specification, as long as they do not conflict each other.

Although the embodiments of the present invention are shown and described above, it can be understood that, the foregoing embodiments are exemplary, and cannot be construed as a limitation to the present invention. Within the scope of the present invention, a person of ordinary skill in the art may make changes, modifications, replacement, and variations to the foregoing embodiments.

## Claims

1. A differential mechanism for a vehicle, comprising:
a shell, wherein a left half axle gear, a right half axle gear, a planet wheel and a planet wheel axle are disposed in the shell, the planet wheel is rotatably mounted on the planet wheel axle, and the planet wheel meshes with the left half axle gear and the right half axle gear;
a power engagement device, wherein the power engagement device comprises a first engagement portion and a second engagement portion, the first engagement portion is connected with the left half axle gear or the right half axle gear, and the second engagement portion rotates synchronously with the shell and is allowed to move axially relative to the shell; and
an engagement portion drive device, wherein the engagement portion drive device comprises: a drive pin and a drive portion, the drive pin is configured to be allowed to rotate with the shell and be allowed to axially move relative to the shell, two ends of the drive pin are respectively matched with the drive portion and the second engagement portion, and the drive portion is configured to drive the drive pin to drive the second engagement portion to move close to the first engagement portion along an axial direction, thereby causing the second engagement portion to be engaged with the first engagement portion.

2. The differential mechanism for the vehicle according to claim 1, wherein a drive axle sliding chute is formed in the shell, and the drive pin is slidably disposed in the drive axle sliding chute.

3. The differential mechanism for the vehicle according to claim 1 or 2, wherein a shell axial slot is also formed in the shell, a second engagement portion protrusion is disposed on the second engagement portion, and the second engagement portion protrusion is disposed in the shell axial slot to cause the second engagement portion to be allowed to rotate with the shell and be allowed to axially move relative to the shell.

4. The differential mechanism for the vehicle according to any one of claims 1 to 3, also comprising: an elastic device, wherein the elastic device elastically presses against the second engagement portion to cause the second engagement portion to have a trend of moving away from the first engagement portion.

5. The differential mechanism for the vehicle according to claim 4, wherein one end of the elastic device elastically presses against the second engagement portion, and the other end of the elastic device elastically presses against the shell.

6. The differential mechanism for the vehicle according to claim 4 or 5, wherein the elastic device is a spiral spring, and the spiral spring is disposed on an outer side of the first engagement portion in a sleeving manner.

7. The differential mechanism for the vehicle according to any one of claims 1 to 6, wherein the drive portion is a hydraulic drive portion, and the hydraulic drive portion comprises:
a follow-up portion, the follow-up portion is allowed to rotate with the drive pin and is allowed to be braked, a drive surface is disposed on the follow-up portion; when the follow-up portion is braked, the drive surface drives the drive pin to move along the axial direction by the sliding of the drive pin on the drive surface, so as to cause the second engagement portion to be engaged with the first engagement portion.

8. The differential mechanism for the vehicle according to claim 7, wherein the hydraulic drive portion also comprises:
a hydraulic brake portion, and the hydraulic brake portion is configured to brake the follow-up portion.

9. The differential mechanism for the vehicle according to claim 8, wherein the hydraulic brake portion is structured as a hydraulic brake caliper; and
one side of the follow-up portion is provided with a brake disc, and the hydraulic brake caliper is used for braking the brake disc.

10. The differential mechanism for the vehicle according to claim 9, wherein the hydraulic brake caliper comprises a friction sheet for clamping the brake disc.

11. The differential mechanism for the vehicle according to any one of claims 7 to 10, wherein the drive surface is a slope or a curved surface.

12. The differential mechanism for the vehicle according to any one of claims 7 to 10, wherein the drive surface comprises: a first section and a second section, the first section is connected with the second section, a joint of the first section and the second section is a lowest point, and the other ends, away from the joint, of the first section and the second section are highest points.

13. The differential mechanism for the vehicle according to claim 12, wherein the follow-up portion comprises: a follow-up portion body and an annular follow-up portion flange disposed on the follow-up portion body, and the drive surface is disposed on an end surface, facing the drive pin, of the follow-up portion flange.

14. The differential mechanism for the vehicle according to any one of claims 7 to 12, wherein a drive surface limiting slot is formed in the drive surface; and one end of the drive pin is located in the drive surface limiting slot.

15. The differential mechanism for the vehicle according to any one of claims 1 to 14, wherein the first engagement portion has a plurality of first engagement teeth distributed along a circumferential direction, and the second engagement portion has a plurality of second engagement teeth distributed along the circumferential direction.

16. The differential mechanism for the vehicle according to any one of claims 1 to 14, wherein the drive pin is in attaching fit with the second engagement portion.

17. A vehicle, comprising the differential mechanism for the vehicle according to any one of claims 1 to 16.
